# EUROPEAN PATENT APPLICATION

(11) **EP 4 752 787 A1**
(43) Date of publication of application: **03.06.2026**
(21) Application number: 25218764.6
(22) Date of filing: 26.11.2025
(51) Int. Cl.: G06N 3/045, G06N 3/0464, G06N 3/088, G06N 5/01, G06N 20/20

(54) **DETECTION PROGRAM, DETECTION METHOD, AND DETECTION DEVICE**

(30) Priority: 28.11.2024 IL 31734224
(71) Applicant: FUJITSU LIMITED, Kawasaki-shi, Kanagawa 211-8588 (JP); B.G. Negev Technologies and Applications Ltd., 8410501 Beer Sheva (IL)
(72) Inventor: KAPRI, Zahi, 841050 Beer Sheva (IL); GROLMAN, Edita, 841050 Beer Sheva (IL); MORIKAWA, Ikuya, Kawasaki-shi, 211-8588 (JP); SHIMIZU, Toshiya, Kawasaki-shi, 211-8588 (JP); ELOVICI, Yuval, 841050 Beer Sheva (IL); SHABTAI, Asaf, Beer Sheva, 841050 (JP)
(74) Representative: Haseltine Lake Kempner LLP

(57) **Abstract**

A detection program causes a computer to execute a process including converting input tabular data into image data, generating a first machine learning model by machine learning using the tabular data as training data, and generating a second machine learning model by machine learning using the image data as training data, and detecting presence of an adversarial attack on input data based on a first prediction result for the input data obtained using the first machine learning model and a second prediction result for the input data obtained using the second machine learning model.

## Description

### FIELD

The present invention relates to a detection program, a detection method, and a detection device.

### BACKGROUND

In recent years, tabular data has been used for various applications. The tabular data often includes various types of data (images, formulas, text, and the like). In the meantime, most current adversarial attacks are designed to attack neural networks trained on homogeneous data (mainly images). Thus, most adversarial detection methods are designed for deep neural network (DNN)-based models. However, adversarial attacks also pose a threat to standard machine learning (ML) models and tabular data.
Non Patent Literature 1: Guo, F.; Zhao, Q.; Li, X.; Kuang, X.; Zhang, J.; Han, Y.; and Tan, Y.-a. "Detecting adversarial examples via prediction difference for deep neural networks" Information Sciences, 501: 182-192, 2019
Non Patent Literature 2: Watson, M.; and Al Moubayed, N. "Attack-agnostic adversarial detection on medical data using explainable machine learning" In 2020 25th International Conference on Pattern Recognition (ICPR), 8180-8187. IEEE, 2021
Non Patent Literature 3: Papernot, N.; McDaniel, P.; and Goodfellow, I. "Transferability in machine learning: from phenomena to blackbox attacks using adversarial samples" arXiv preprint arXiv:1605.07277, 2016

By the way, although measures have been taken for each type of data using the adversarial detection methods, there is room for improvement for tabular data that often contains various types of data.

In one aspect, it is desirable to provide a detection program, a detection method, and a detection device capable of effectively detecting anomalies for tabular data.

### SUMMARY

According to an aspect of an embodiment, a detection program causes a computer to execute a process including converting input tabular data into image data, generating a first machine learning model by machine learning using the tabular data as training data, and generating a second machine learning model by machine learning using the image data as training data, and detecting presence of an adversarial attack on input data based on a first prediction result for the input data obtained using the first machine learning model and a second prediction result for the input data obtained using the second machine learning model.

### BRIEF DESCRIPTION OF THE DRAWINGS

Reference is made, by way of example only, to the following drawings in which:
FIG. 1 is a diagram describing a detection device according to a first embodiment.
FIG. 2 is a functional block diagram illustrating the functional configuration of the detection device according to the first embodiment.
FIG. 3 is a diagram describing training of each machine learning model.
FIG. 4 is a diagram describing a prediction by each machine learning model.
FIG. 5 is a diagram describing detection of adversarial attacks performed by a SHAP-based detector.
FIG. 6 is a diagram describing detection of adversarial attacks performed by a prediction difference detector.
FIG. 7 is a diagram describing detection of adversarial attacks performed by a similarity detector.
FIG. 8 is a diagram describing detection of adversarial attacks performed by a VAE detector.
FIG. 9 is a diagram describing detection of adversarial attacks using an ensemble method.
FIG. 10 is a flowchart indicating a flow of processing performed by the detection device according to the first embodiment.
FIG. 11 is a diagram describing a detection device according to a second embodiment.
FIG. 12 is a functional block diagram illustrating the functional configuration of the detection device according to the second embodiment.
FIG. 13 is a diagram describing generation of perturbed data.
FIG. 14 is a diagram describing scale adjustment and data conversion.
FIG. 15 is a diagram describing generation of training data.
FIG. 16 is a diagram describing training of a binary detector.
FIG. 17 is a diagram describing detection processing.
FIG. 18 is a flowchart indicating a flow of processing according to the second embodiment.
FIG. 19 is a diagram describing a hardware

### DESCRIPTION OF EMBODIMENTS

Preferred embodiments will be explained with reference to accompanying drawings. Not that the present invention is not limited by the embodiments. Each of the embodiments can be combined as appropriate within the range that there is no contradiction.

In recent years, adversarial attacks against tabular data have become an issue. For example, an adversarial attack is an example of an attack that rewrites some of the features of tabular data to mislead the determination result of a machine learning model. Specifically, tabular data that has been subjected to an adversarial attack may be determined as non-normal data even though it is normal data, or determined as normal data even though it is non-normal, atypical data. For example, it is explained with a binary determination model as follows: when the binary determination model outputs normal (normal value) or non-normal (abnormal value), an abnormal value is output even though a normal value should be output.

Thus, there is a demand for a detection device that correctly determines normal tabular data as normal data and non-normal, atypical data as atypical data. The present disclosure describes a detection device that uses tabular data and image data converted from the tabular data to detect whether an adversarial attack has been made on the tabular data.

### First Embodiment

### (a) First Embodiment

### Overall Configuration

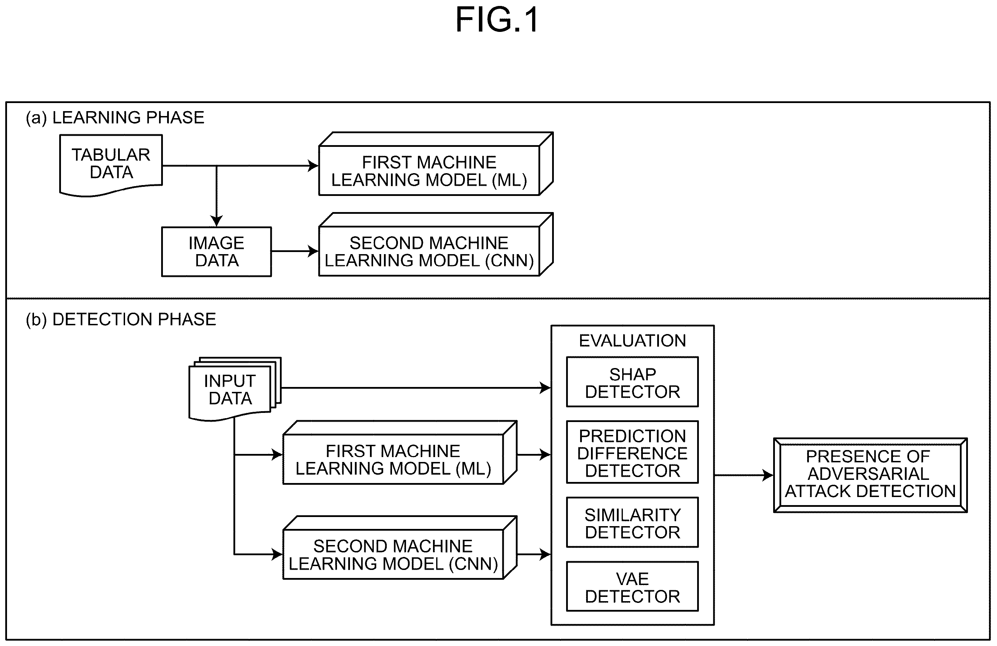

FIG. 1 is a diagram describing a detection device 10 according to a first embodiment. The detection device 10 is an example of a computer that detects whether there has been an adversarial attack on tabular data through a learning phase illustrated in (a) of FIG. 1 and a detection phase illustrated in (b) of FIG. 1.

As illustrated in (a) of FIG. 1, the detection device 10 uses tabular data to execute training of a first machine learning model (may also be referred to as machine learning (ML) in the following). The detection device 10 also uses image data converted from the tabular data to execute training of a second machine learning model (may also be referred to as a convolutional neural network (CNN) in the following) of a different architecture from the first machine learning model.

Thereafter, as illustrated in (b) of FIG. 1, the detection device 10 executes detection of an adversarial attack using a plurality of detectors targeted at input data that is tabular data to be a determination target. For example, the detection device 10 detects whether there has been an adversarial attack on the input data by using the output result obtained by inputting the input data to the ML, the output result obtained by inputting the input data to the CNN, the prediction result predicted by using the input data and each of the output results, and the like.

### Functional Configuration

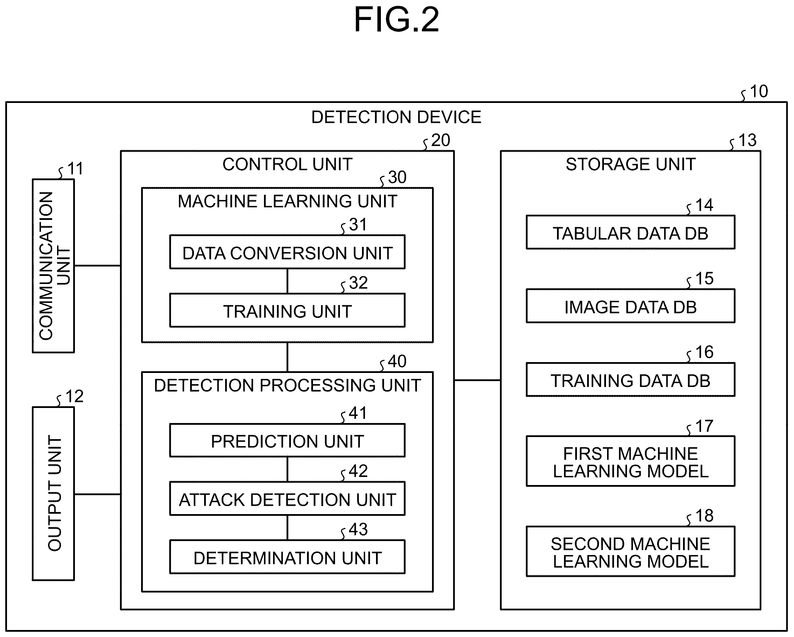

FIG. 2 is a functional block diagram illustrating the functional configuration of the detection device 10 according to the first embodiment. As illustrated in FIG. 2, the detection device 10 includes a communication unit 11, an output unit 12, a storage unit 13, and a control unit 20.

The communication unit 11 is a processing unit that controls communication with other devices, and it is, for example, a communication interface, or the like. For example, the communication unit 11 receives instructions to start processing and input data as a determination target from an administrator terminal or the like, and transmits the determination results and the like to the administrator terminal.

The output unit 12 is a processing unit that displays and outputs various types of information, and it is implemented, for example, by a display, a touch panel, and the like. For example, the output unit 12 outputs the interim results of training, training results, interim results of determination, determination results, and the like.

The storage unit 13 is a processing unit that stores various types of data, various types of computer programs executed by the control unit 20, and the like, being implemented by, for example, a memory, a hard disk, and the like. The storage unit 13 stores a tabular data DB 14, an image data DB 15, a training data DB 16, a first machine learning model 17, and a second machine learning model 18, for example.

The tabular data DB 14 is a database that stores each piece of tabular data used for training. For example, tabular data corresponds to data that represents the communication history between certain devices, setting information related to communication, and the like in a tabular form. The tabular data DB 14 also includes normal tabular data that has not been subjected to falsification and the like, and known non-normal tabular data that has been subjected to falsification and the like.

The image data DB 15 is a database that stores each piece of image data converted from each piece of tabular data stored in the tabular data DB 14. For example, like the tabular data DB 14, the image data DB 15 includes normal image data converted from normal tabular data that has not been subjected to falsification and the like, and non-normal image data converted from non-normal tabular data that has been subjected to falsification and the like.

The training data DB 16 is a database that stores each piece of training data to train the first machine learning model 17 and the second machine learning model 18. For example, the training data DB 16 stores tabular training data used for training the first machine learning model 17 and image training data used for training the second machine learning model 18.

Note that training data used in the first embodiment is benign data. Note here that benign data is data known to be normal or non-normal. In other words, normal data is determined as normal, and atypical data is determined as non-normal. Furthermore, a label "0" indicating that the data is normal, a label "1" indicating that the data is atypical, and the like may be applied to each piece of training data.

The first machine learning model 17 is an ML using XGBoost, random forest, or the like and, in response to the input of tabular data, outputs the output result indicating whether it is normal (normal value) or atypical (abnormal value). Note that the first machine learning model 17 is trained using tabular data.

The second machine learning model 18 is a CNN that uses a different architecture from the first machine learning model 17, such as a neural network, for example, and, in response to the input of image data, outputs the output result indicating whether it is normal (normal value) or atypical (abnormal value). Note that the second machine learning model 18 is trained using image data.

Here, the output of the ML and the CNN may be a binary determination indicating normal or atypical, or a multi-value determination that classifies the output into a plurality of classes defining a plurality of levels including normal and non-normal (atypical). For example, in a case of binary determination, the probability of being normal, the probability of being non-normal, and the like are included. In a case of multi-value determination, a vector whose elements are the probabilities (sets of numerical values) that correspond to respective n classes is output.

The control unit 20 is a processing unit that controls the entire detection device 10, and it is implemented, for example, by a processor or the like. The control unit 20 includes a machine learning unit 30 and a detection processing unit 40. The machine learning unit 30 and the detection processing unit 40 are implemented by electronic circuits provided to the processor or a process and the like executed by the processor.

### Description of Machine Learning Unit 30

The machine learning unit 30 is a processing unit that includes a data conversion unit 31 and a training unit 32, and executes generation of training data, generation of the first machine learning model 17 (ML), and generation of the second machine learning model 18 (CNN).

The data conversion unit 31 is a processing unit that converts each piece of tabular data stored in the tabular data DB 14 into image data. For example, the data conversion unit 31 converts tabular data into image data using open source Tab2img or the like, and stores the image data in the image data DB 15.

For example, the data conversion unit 31 stores the tabular data used for image data conversion and the converted image data in the training data DB 16 as training data. In order to compare explanations using the predictions based on the above respective machine learning models or using various explainability methods, the data conversion unit 31 saves, in the storage unit 13, index vectors indicating the position of each of the features of the tabular data in the converted image.

To give an example, the data conversion unit 31 can separate numerical data in the tabular data in a predetermined range (region) in order from the beginning to convert into image data with each region being the numerical data of each separated range. The data conversion unit 31 can also compute correlation coefficients of the respective pieces of numerical data in the tabular data, and place the numerical data with close correlation at nearby pixels to enable conversion to image data. The methods described herein are only examples, and methods are not limited thereto. It is possible to employ various known methods.

The training unit 32 is a processing unit that generates the first machine learning model 17 (ML) and the second machine learning model 18 (CNN) by unsupervised learning using the training data stored in the training data DB 16.

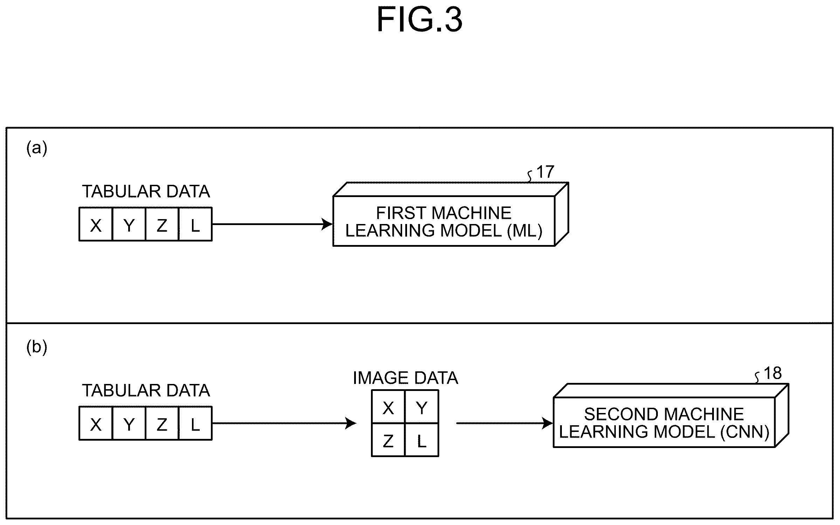

FIG. 3 is a diagram describing training of each of the machine learning models. For example, as illustrated in (a) of FIG. 3, the training unit 32 executes training of the first machine learning model 17 (ML) using tabular data that contains numerical data "X, Y, Z, L". Furthermore, as illustrated in (b) of FIG. 3, the training unit 32 executes training of the second machine learning model 18 (CNN) using image data that is converted from the tabular data that contains numerical data "X, Y, Z, L".

### Description of Detection Processing Unit 40

The detection processing unit 40 is a processing unit that includes a prediction unit 41, an attack detection unit 42, and a determination unit 43, and detects presence of an adversarial attack on the target tabular data by using the trained first machine learning model 17 (ML) and second machine learning model 18 (CNN).

The prediction unit 41 is a processing unit that predicts, for the tabular data (input data) as the determination target, the presence of an adversarial attack using each of the machine learning models. Furthermore, the prediction unit 41 outputs each prediction result to the attack detection unit 42.

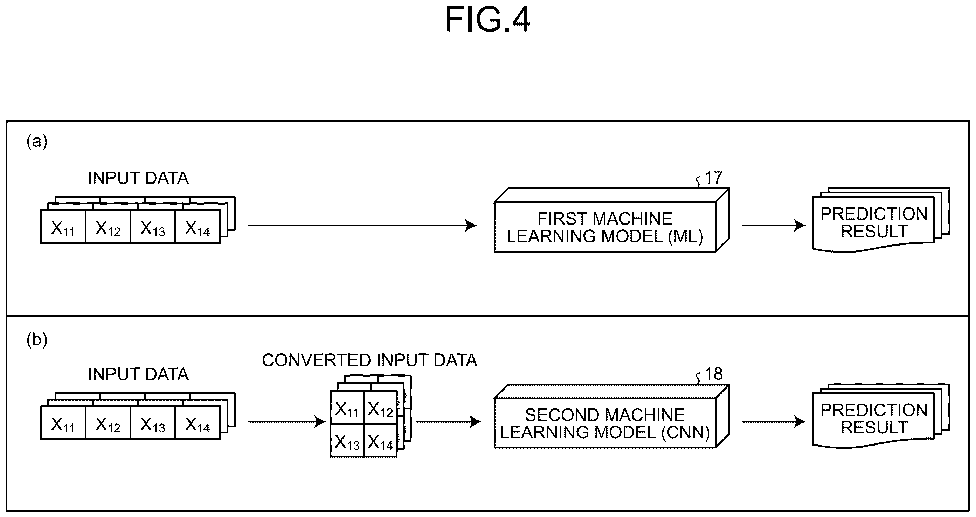

FIG. 4 is a diagram describing predictions by the respective machine learning models. As illustrated in (a) of FIG. 4, the prediction unit 41 inputs input data that is in tabular form into the trained first machine learning model 17 to obtain a prediction result. Furthermore, as illustrated in (b) of FIG. 4, the prediction unit 41 converts the input data that is in tabular form into image data, and inputs the image data (converted input data) into the trained second machine learning model 18 to obtain a prediction result.

The attack detection unit 42 is a processing unit that detects the presence of an adversarial attack on the target input data by using each of the prediction results obtained by the prediction unit 41. Specifically, the attack detection unit 42 uses a plurality of detectors to detect the presence of an adversarial attack on the input data, and outputs the detection result to the output unit 12.

### SHAP Detector

For example, the attack detection unit 42 detects the presence of an adversarial attack using a SHAP-based detector (may simply be referred to as SHAP detector in the following) that outputs a Shapely value vector that is an example of an explainable explanation value of the machine learning models. Specifically, the attack detection unit 42 inputs input data to the SHAP detector that outputs explanation values that explain the prediction result of the machine learning models, and obtain a first explanation value for the first machine learning model 17 and a second explanation value for the second machine learning model 18. Then, the attack detection unit 42 detects the presence of an adversarial attack on the input data based on the similarity between the first explanation value and the second explanation value.

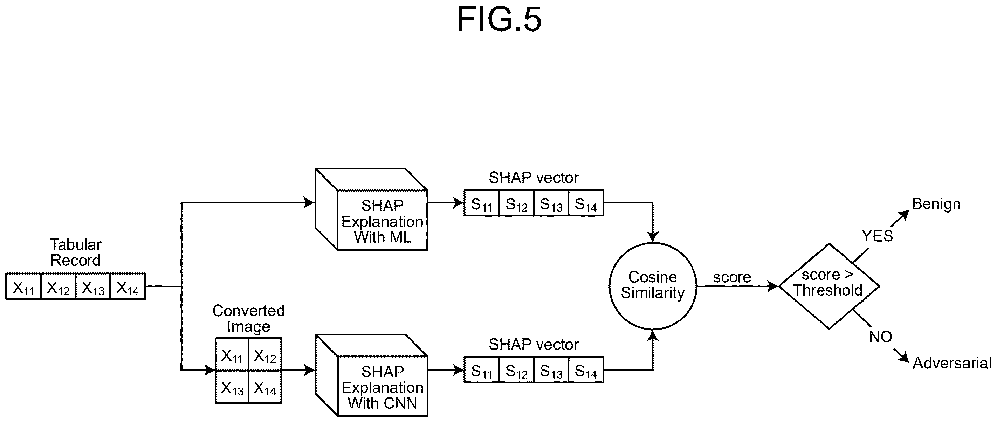

FIG. 5 is a diagram describing detection of adversarial attacks performed by the SHAP-based detector. As illustrated in FIG. 5, the attack detection unit 42 inputs, to the SHAP detector prepared for the ML, input data (tabular data) having "X₁₁,X₁₂,X₁₃,X₁₄" input to the first machine learning model 17 (ML) as elements to obtain a SHAP vector "S₁₁,S₁₂,S₁₃,S₁₄".

Similarly, the attack detection unit 42 inputs, to the SHAP detector prepared for the CNN, the image data converted from the tabular data (input data) that is the input data having "X₁₁,X₁₂,X₁₃,X₁₄" input to the second machine learning model 18 (CNN) as elements to obtain a SHAP vector "S₁₁, S₁₂, S₁₃, S₁₄".

Then, the attack detection unit 42 computes the cosine similarity (score) of the SHAP vectors to determine that the input data is benign if the score is equal to or greater than a threshold and determine that the input data is under an adversarial attack if the score is less than the threshold. Note that the SHAP detector may be a model that is trained in advance to output the SHAP vectors, or may be a physical model using a calculation formula.

### Prediction Difference Detector

For example, the attack detection unit 42 detects the presence of an adversarial attack using a prediction difference detector that computes the difference between the prediction results of the respective models. Specifically, the attack detection unit 42 computes the difference between a first prediction result obtained using the first machine learning model 17 and a second prediction result obtained using the second machine learning model 18. The attack detection unit 42 detects that there is an adversarial attack on the input data if the difference is equal to or greater than a threshold, and detects that there is no adversarial attack on the input data if the difference is less than the threshold.

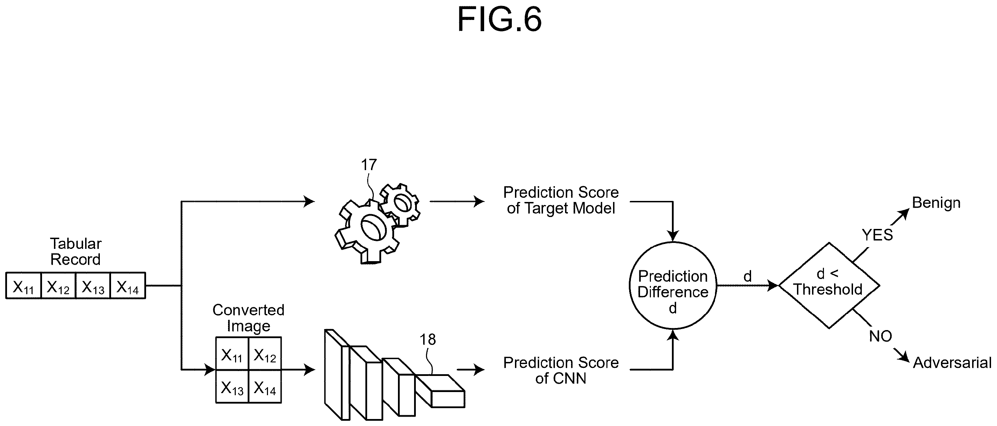

FIG. 6 is a diagram describing detection of adversarial attacks performed by the prediction difference detector. As illustrated in FIG. 6, the attack detection unit 42 obtains the prediction result (prediction scores) obtained by inputting input data (tabular data) having "X₁₁,X₁₂,X₁₃,X₁₄" as elements into the first machine learning model 17 (ML). Similarly, the attack detection unit 42 obtains the prediction result (prediction scores) obtained by inputting image data converted from the tabular data having "X₁₁,X₁₂,X₁₃,X₁₄" as elements into the second machine learning model 18 (CNN).

Then, as an example, by using an L2 norm or the like, the attack detection unit 42 computes a difference value (d) between the respective prediction results to determine that the input data is benign if the difference value (d) is less than a threshold and determine that the input data is under an adversarial attack if the difference value (d) is equal to or greater than the threshold.

In other words, the attack detection unit 42 makes determination not based on whether the prediction results match but based on the difference in the predictions of the respective models. For example, when the output of each of the models is a binary determination, a scalar value is output from each of the models. Thus, the attack detection unit 42 makes determination based on the difference of those values. When the output of each of the models is a multi-value determination, a probability (vector) belonging to each class is output from each of the models. Thus, the attack detection unit 42 makes determination by computing the norm distance of the vectors.

### Similarity Detector

For example, the attack detection unit 42 detects the presence of an adversarial attack based on similarities and differences between the outputs of different explainable artificial intelligence (XAI) techniques for the same sample (input data). For example, the attack detection unit 42 detects the presence of an adversarial attack based on the similarity between the output result of the SHAP detector prepared as an explainable detector for the first machine learning model (ML) 17 and the output result of a LIME detector.

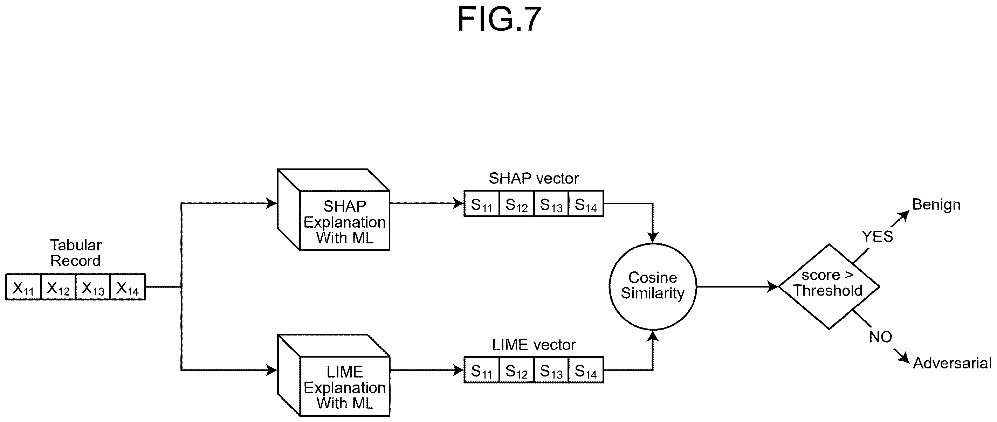

FIG. 7 is a diagram describing detection of adversarial attacks performed by a similarity detector. As illustrated in FIG. 7, the attack detection unit 42 inputs, to the SHAP detector prepared for the ML, input data (tabular data) having "X₁₁,X₁₂,X₁₃,X₁₄" input to the first machine learning model 17 (ML) as elements to obtain a SHAP vector "S₁₁, S₁₂, S₁₃, S₁₄".

Similarly, the attack detection unit 42 inputs, to the LIME detector prepared for the ML, input data (tabular data) having "X₁₁,X₁₂,X₁₃,X₁₄" input to the first machine learning model 17 (ML) as elements to obtain a LIME vector "L₁₁,L₁₂,L₁₃,L₁₄".

Then, the attack detection unit 42 computes the cosine similarity (score) between the SHAP vector and the LIME vector to determine that the input data is benign if the score is equal to or greater than a threshold and determine that the input data is under an adversarial attack if the score is less than the threshold. Note that the LIME detector may be a model that is trained in advance to output the LIME vectors, or may be a physical model using a calculation formula.

### VAE Detector

For example, the attack detection unit 42 detects the presence of an adversarial attack using Variational AutoEncoder (VAE) that is trained in advance using a benign sample to restore the SHAP values. For example, the attack detection unit 42 inputs the output result of the SHAP detector prepared as an explainable detector for the first machine learning model (ML) 17 to the VAE to obtain a reconstruction result, and detects the presence of an adversarial attack based on the reconstruction error.

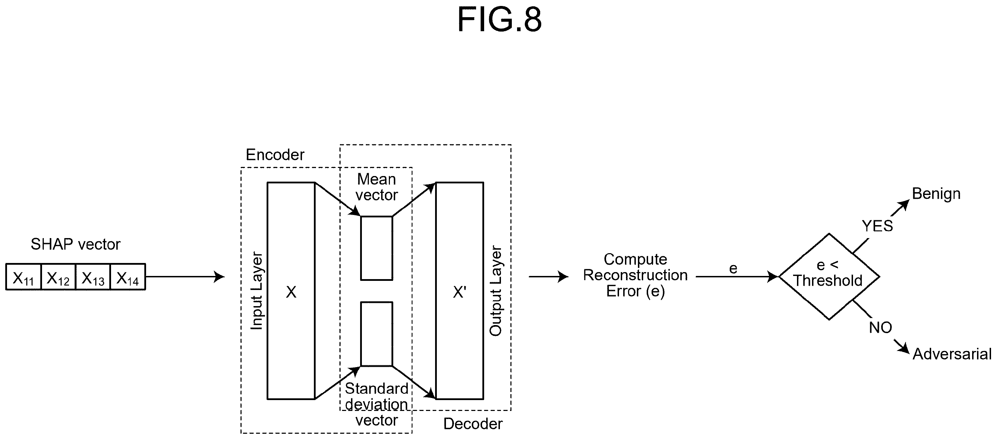

FIG. 8 is a diagram describing detection of adversarial attacks performed by a VAE detector. As illustrated in FIG. 8, the attack detection unit 42 obtains the SHAP vector "S₁₁,S₁₂,S₁₃,S₁₄" using the same method as that described in FIG. 5. Then, the attack detection unit 42 inputs the SHAP vector "S₁₁,S₁₂,S₁₃,S₁₄" to the encoder of the VAE, and obtains the SHAP vector (reconstructed SHAP vector) that is reconstructed from the decoder of the VAE. Thereafter, the attack detection unit 42 computes the error between the input SHAP vector and the output reconstructed SHAP vector (reconstruction error e). Then, the attack detection unit 42 determines that the input data is benign if the reconstruction error e is less than a threshold, and determines that the input data is under an adversarial attack if the reconstruction error e is equal to or greater than the threshold.

### Ensemble Determination

Returning to FIG. 2, the determination unit 43 is a processing unit that obtains explanation values for the first machine learning model 17 and explanation values for the second machine learning model 18 using a plurality of detectors that output the explanation values explaining the prediction results of the respective machine learning models, and detects the presence of an adversarial attack on the input data based on each of the explanation values obtained from the respective detectors.

Specifically, the determination unit 43 detects the presence of an adversarial attack on the input data by comprehensively determining the detection results obtained by the four detectors described in FIG. 5 to FIG. 8. Note that the presence of an adversarial attack may be detected using only the attack detection unit 42, or the presence of an adversarial attack may be detected based on the result of the determination unit 43.

For example, the determination unit 43 detects the presence of an adversarial attack by majority vote of the detection results obtained by the four detectors. Specifically, the determination unit 43 determines that input data is benign when there are many "benign" detections in the detection results of the four detectors, and determines that input data is under an adversarial attack when there are many "under adversarial attack" detections. Which of the detections is to be employed is determined in advance, for the case with the same number of detections.

As another example, the determination unit 43 detects the presence of an adversarial attack using OR determination on the detection results obtained by the four detectors. Specifically, the determination unit 43 determines that the input data is under an adversarial attack when any one of the four detectors detects "under adversarial attack". When all of the four detectors detect "benign", the determination unit 43 determines that the input data is benign.

As another example, the determination unit 43 detects the presence of an adversarial attack by an ensemble approach that uses the detection results for the tabular data obtained by the four detectors and the detection results for the image data obtained by the four detectors.

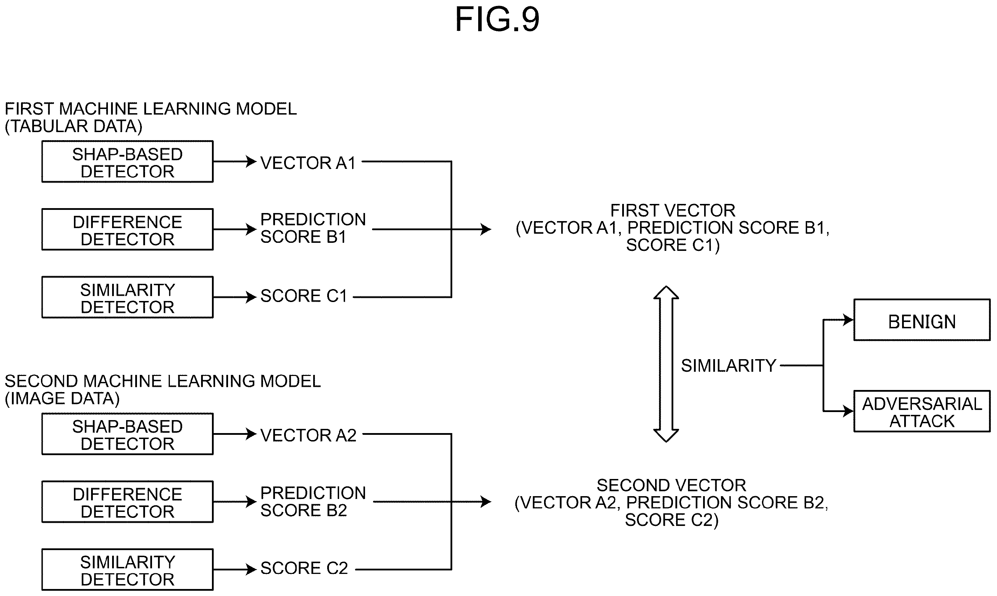

FIG. 9 is a diagram describing detection of adversarial attacks using an ensemble method. As illustrated in FIG. 9, the determination unit 43 obtains the results of the respective detectors executed by the attack detection unit 42 for the tabular data that is the input target for the first machine learning model 17. Specifically, the determination unit 43 obtains the SHAP vector (vector A1) output by the SHAP-based detector illustrated in FIG. 5, the prediction result (prediction score B1) output by the first machine learning model illustrated in FIG. 6, and the similarity (score C1) by the similarity detector illustrated in FIG. 7. Then, the determination unit 43 generates a first vector in which the SHAP vector (vector A1), the prediction result (prediction score B1), and the similarity (score C1) are concatenated.

Furthermore, the determination unit 43 obtains the results of the respective detectors executed by the attack detection unit 42 for the image data converted from the tabular data, which is the image data as the input target for the second machine learning model 18. Specifically, the determination unit 43 uses the SHAP vector (vector A2) output by the SHAP-based detector illustrated in FIG. 5, the prediction result (prediction score B2) output by the second machine learning model illustrated in FIG. 6, and the similarity (score C2) by the similarity detector illustrated in FIG. 7. Then, the determination unit 43 generates a second vector in which the SHAP vector (vector A2), the prediction result (prediction score B2), and the similarity (score C2) are concatenated.

Then, the determination unit 43 determines that the input data (tabular data) as benign when the cosine similarity between the first vector and the second vector is equal to or greater than a threshold, and determines that there is an adversarial attack on the input data (tabular data) when the cosine similarity is less than the threshold.

In the example described above, a case of using the results of the respective detectors illustrated in FIG. 5 to FIG. 7 is described. However, it is not limited to such example; and one or more results can be combined arbitrarily, for example. Also, LIME vectors of the LIME detector may be used instead of the SHAP detector illustrated in FIG. 7, or both of those may be used as well.

### Flow of Processing

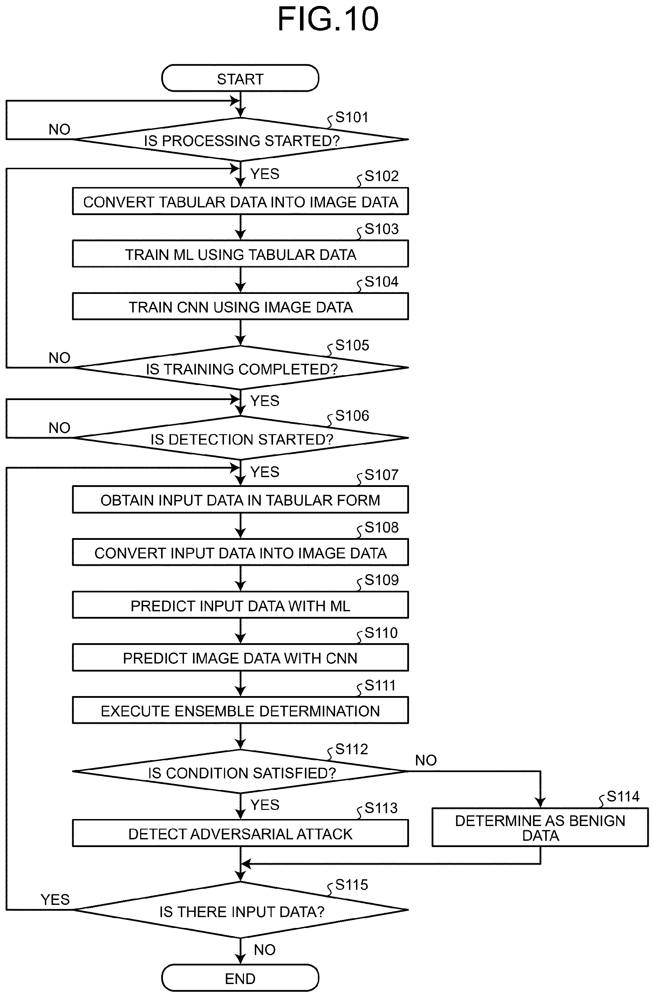

FIG. 10 is a flowchart indicating a flow of processing performed by the detection device 10 according to the first embodiment. Although not limited thereto, training and detection (prediction) are described herein as a series of flows. However, training and detection can also be executed in separate flows.

As illustrated in FIG. 10, if the processing is started by an instruction of an administrator or the like (Yes at S101), the detection device 10 converts tabular data into image data (S102). Subsequently, the detection device 10 executes training of the first machine learning model 17 (ML) using the tabular data (S103), and executes training of the second machine learning model 18 (CNN) using the image data (S104). Note that the order of training can be changed arbitrarily.

Here, if keeping the training (No at S105), the detection device 10 repeats S102 and thereafter and, if ending the training (Yes at S105), waits for an instruction of the administrator or the like to start detection (S106).

Then, if detection processing is started (Yes at S106), the detection device 10 obtains input data in tabular form (S107) and converts the input data into image data (S108). Subsequently, the detection device 10 inputs the input data to the ML to obtain the prediction result (S109), and inputs the image data to the CNN to obtain the prediction result (S110). Note that the order of prediction can be changed arbitrarily.

Thereafter, the detection device 10 executes an ensemble determination using each of the prediction results (S111), detects an adversarial attack (S113) if the ensemble determination satisfies a prescribed condition (Yes at S112), and determines as benign data (S114) if the ensemble determination does not satisfy the prescribed condition (No at S112).

Note that the detection device 10 executes S107 and thereafter if there is input data (Yes at S115), and ends the processing if there is no input data (No at S115).

### Effects

As described above, the detection device 10 detects the presence of an adversarial attack on the input data by using the ML trained using tabular data and the CNN trained using image data converted from the tabular data. As a result, the detection device 10 can detect changes in the features that are difficult to be detected with the tabular data alone, and effectively detect anomalies for the tabular data.

The detection device 10 also detects the presence of an adversarial attack using different architectures for a model for tabular form and a model for image. As a result, the detection device 10 can accurately detect an adversarial attack that slightly changes the features.

The detection device 10 also generates the ML and the CNN through unsupervised learning. As a result, the detection device 10 can also detect novel or unseen adversarial attacks, thereby achieving various anomaly detections.

The detection device 10 also executes an ensemble determination using a plurality of detectors. As a result, the detection device 10 can detect adversarial attacks from a plurality of perspectives and improve the detection accuracy of novel or unseen adversarial attacks compared to the case of using a single detector.

### Second Embodiment

### (b) Second Embodiment

While the detection of adversarial attacks using benign data not subjected to adversarial attacks and a plurality of machine learning models is described in the first embodiment, it is not limited to such a case. For example, adversarial attacks can be detected using perturbed data obtained by applying arbitrary perturbations on benign data.

Thus, in the second embodiment, a detection device 10 that uses perturbed data to detect an adversarial attack will be described. In other words, in the second embodiment, benign data in the same concept as that of the first embodiment and arbitrarily created perturbed data are used. Note here that perturbed data that includes perturbed tabular data and perturbed image data to be described below is data generated such that normal data is determined as non-normal or data generated such that non-normal data is determined as normal.

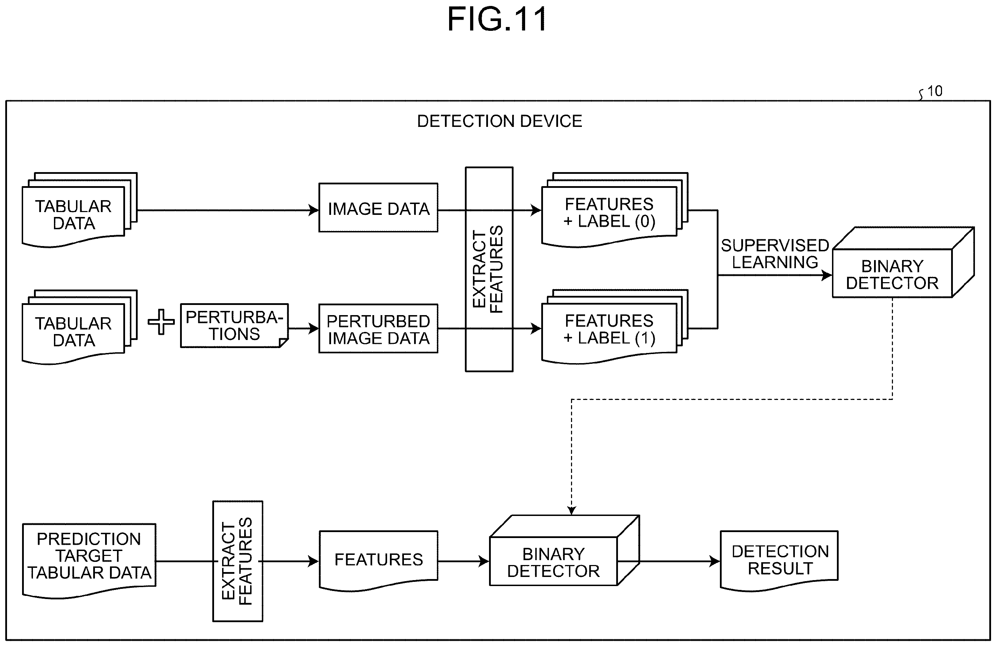

FIG. 11 is a diagram describing the detection device 10 according to the second embodiment. The detection device 10 generates a first image based on tabular data and a second image using the tabular data with perturbations. The detection device 10 obtains a first classification result (classification vector) for the first image and a second classification result (classification vector) for the second image by using a first machine learning model trained in advance. The detection device 10 uses the first classification result and the second classification result to train a second machine learning model (binary detector) that is different from the first machine learning model. The detection device 10 uses the trained second machine learning model to detect the presence of an adversarial attack on the tabular input data.

Specifically, as illustrated in FIG. 11, the detection device 10 converts benign tabular data into image data, extracts features of the image data, and generates benign training data in which a label "0" indicating as being benign is associated with the features. In the meantime, the detection device 10 converts perturbed tabular data, which is obtained by applying perturbations on the benign tabular data, into perturbed image data, extracts features of the perturbed image data, and generates perturbed training data in which a label "1" indicating as being not benign (being perturbed) is associated with the features.

Then, the detection device 10 executes training of the binary detector that outputs whether it is benign in response to the input of the features, by supervised learning using the benign training data and the perturbed training data.

Thereafter, the detection device 10 extracts features from the tabular data as the prediction target (detection target), inputs the features to the trained binary detector, and detects the presence of an adversarial attack based on the output result of the binary detector.

### Functional Configuration

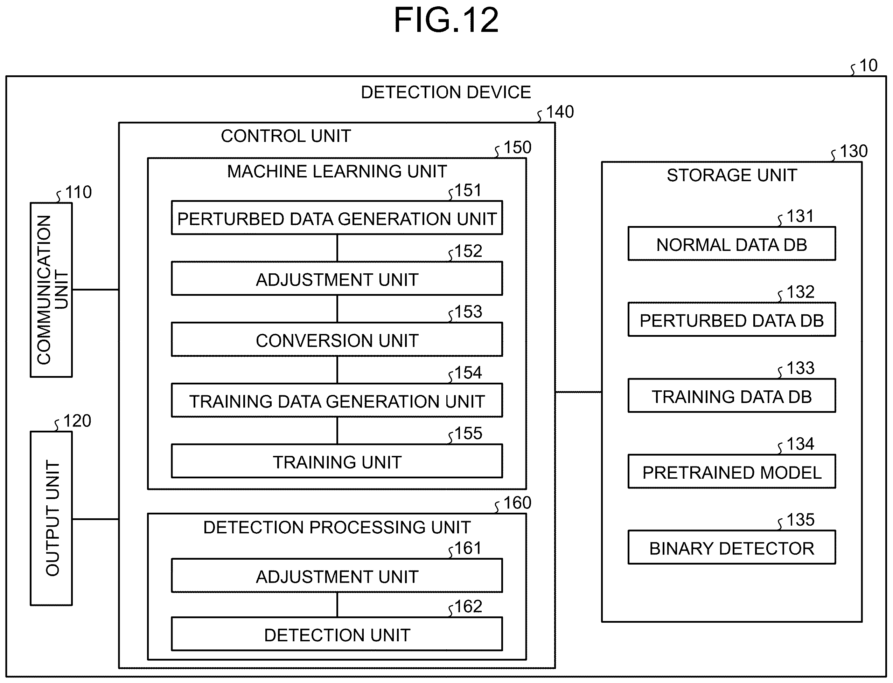

FIG. 12 is a functional block diagram illustrating the functional configuration of the detection device 10 according to the second embodiment. As illustrated in FIG. 12, the detection device 10 includes a communication unit 110, an output unit 120, a storage unit 130, and a control unit 140.

The communication unit 110 is a processing unit that controls communication with other devices, and it is, for example, a communication interface, or the like. For example, the communication unit 110 receives instructions to start processing and input data as a determination target from an administrator terminal or the like, and transmits the determination results and the like to the administrator terminal.

The output unit 120 is a processing unit that displays and outputs various types of information, and it is implemented, for example, by a display, a touch panel, and the like. For example, the output unit 120 outputs the interim results of training, training results, interim results of determination, determination results, and the like.

The storage unit 130 is a processing unit that stores various types of data, various types of computer programs executed by the control unit 140, and the like, being implemented by, for example, a memory, a hard disk, and the like. For example, the storage unit 130 stores a normal data DB 131, a perturbed data DB 132, a training data DB 133, a pretrained model 134, and a binary detector 135.

The normal data DB 131 is a database that stores benign data that has not been subjected to adversarial attacks. For example, the normal data DB 131 stores benign tabular data that has not been subjected to adversarial attacks. Note that benign tabular data may be referred to as original data.

The perturbed data DB 132 is a database that stores perturbed data generated to induce different determinations. For example, the perturbed data DB 132 stores perturbed data (perturbed tabular data) that is tabular data containing perturbations generated by a perturbed data generation unit 151 to be described below.

The training data DB 133 is a database that stores training data used for training the binary detector 135 to be described below. Specifically, the training data DB 133 stores, as training data generated from the benign tabular data, the training data in which explanatory variables (features) and objective variables (positive label (0)) are associated. Furthermore, the training data DB 133 stores, as training data generated from the perturbed tabular data, the training data in which explanatory variables (features) and objective variables (negative label (1)) are associated.

The pretrained model 134 is an example of the first machine learning model that is trained on a large dataset to extract features in response to the input of the tabular data. For the pretrained model 134, it is possible to employ an image classification model that is an architecture such as a neural network, CNN, or the like.

The binary detector 135 is an example of the second machine learning model that detects whether there is an adversarial attack on the tabular data as the detection target. For example, the binary detector 135 is a model that is trained by a machine learning unit 150 to be described below, which detects the presence of an adversarial attack in response to the input of features obtained from the tabular data. For the binary detector 135, it is possible to employ an architecture such as a neural network, CNN, or the like.

The control unit 140 is a processing unit that controls the entire detection device 10, and it is implemented, for example, by a processor or the like. The control unit 140 includes the machine learning unit 150 and a detection processing unit 160. The machine learning unit 150 and the detection processing unit 160 are implemented by electronic circuits provided to the processor or a process and the like executed by the processor.

### Description of Machine Learning Unit 150

The machine learning unit 150 is a processing unit that includes the perturbed data generation unit 151, an adjustment unit 152, a conversion unit 153, a training data generation unit 154, and a training unit 155, and executes generation of training data and training of the binary detector 135.

The perturbed data generation unit 151 is a processing unit that generates perturbed data that is obtained by adding perturbations to the benign tabular data stored in the normal data DB 131. Specifically, the perturbed data generation unit 151 generates perturbed data using a plurality of different black-box attacks, and stores it in the perturbed data DB 132.

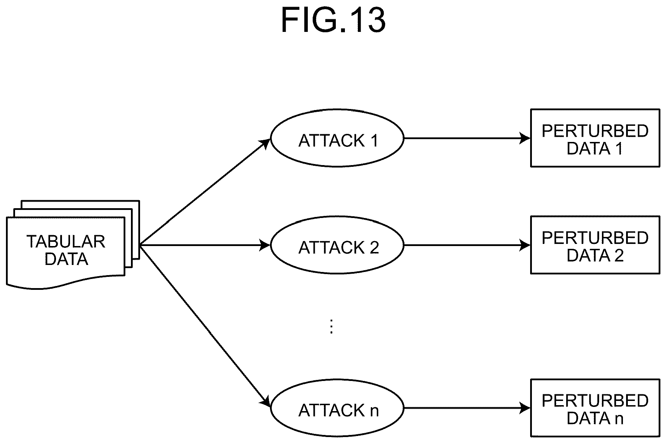

FIG. 13 is a diagram describing generation of perturbed data. As illustrated in FIG. 13, the perturbed data generation unit 151 generates perturbed data 1 to perturbed data n by executing respective known attack 1 to attack n on benign tabular data. For example, the perturbed data generation unit 151 generates perturbed data by inputting tabular data into a pretrained machine learning model or generates perturbed data by arbitrarily changing part of the tabular data.

The adjustment unit 152 is a processing unit that executes scaling for each dataset of tabular data in the normal data DB 131 and perturbed data in the perturbed data DB 132. Specifically, the adjustment unit 152 uses the z-normalization scaler to execute scaling of each of the datasets and outputs those to the conversion unit 153. The adjustment unit 152 executes scaling by two different scaler instances, since the mean (or mean variation) and standard deviation (or standard variation) for each of the features used to compute the z-scores are different for both datasets, for example.

The conversion unit 153 is a processing unit that converts tabular data into image data. Specifically, the conversion unit 153 converts each of the tabular data in the normal data DB 131 and the perturbed data in the perturbed data DB 132 into image data using the same method as that of the first embodiment. The conversion unit 153 then changes the size of each piece of image data to "244 × 244" using, as an example, an open source image conversion software, the python imaging library (PIL), and changes the size to "244 × 244 × 3" by multiplying the image data by 3 in accordance with the RGB format. This allows the generated image data to be adapted to the pretrained model 134.

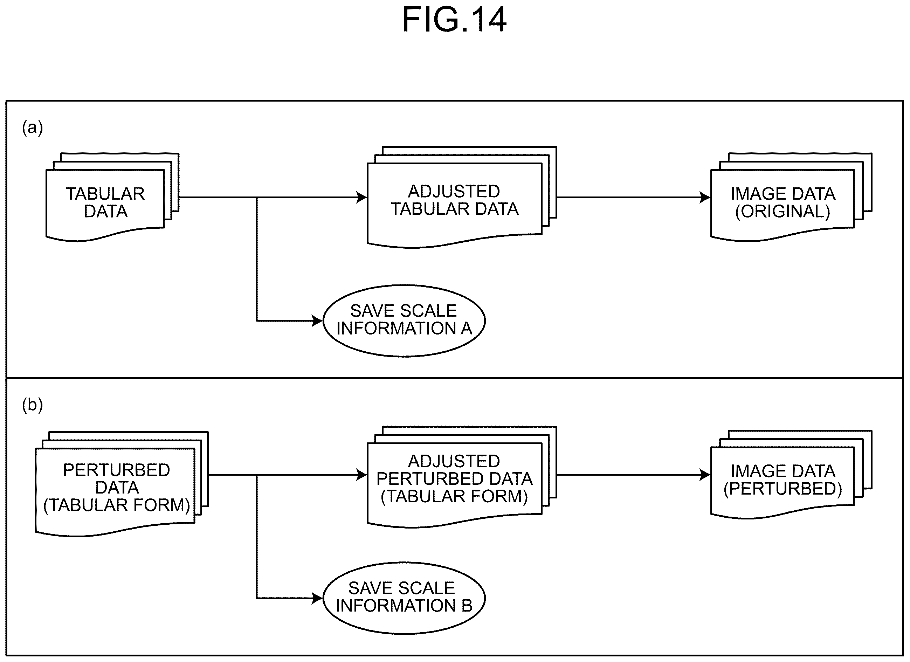

Here, scaling and image conversion processing will be described. FIG. 14 is a diagram describing scale adjustment and data conversion. As illustrated in (a) of FIG. 14, the adjustment unit 152 executes scale adjustment of the benign tabular data, and generates adjusted tabular data. At this time, the adjustment unit 152 stores scale information A regarding the executed scaling in the storage unit 130. Then, the conversion unit 153 converts the adjusted tabular data into image data (original image data).

Similarly, as illustrated in (b) of FIG. 14, the adjustment unit 152 executes scale adjustment of the perturbed data, and generates adjusted perturbed data. At this time, the adjustment unit 152 stores scale information B regarding the executed scaling in the storage unit 130. Then, the conversion unit 153 converts the adjusted perturbed data into image data (perturbed image data).

Returning to FIG. 12, the training data generation unit 154 is a processing unit that executes generation of training data that is used to train the binary detector 135. Specifically, the training data generation unit 154 generates training data by adding labels to the results that are obtained by inputting the original image data and the perturbed image data generated by the conversion unit 153 into the pretrained model 134 and stores the training data in the training data DB 133.

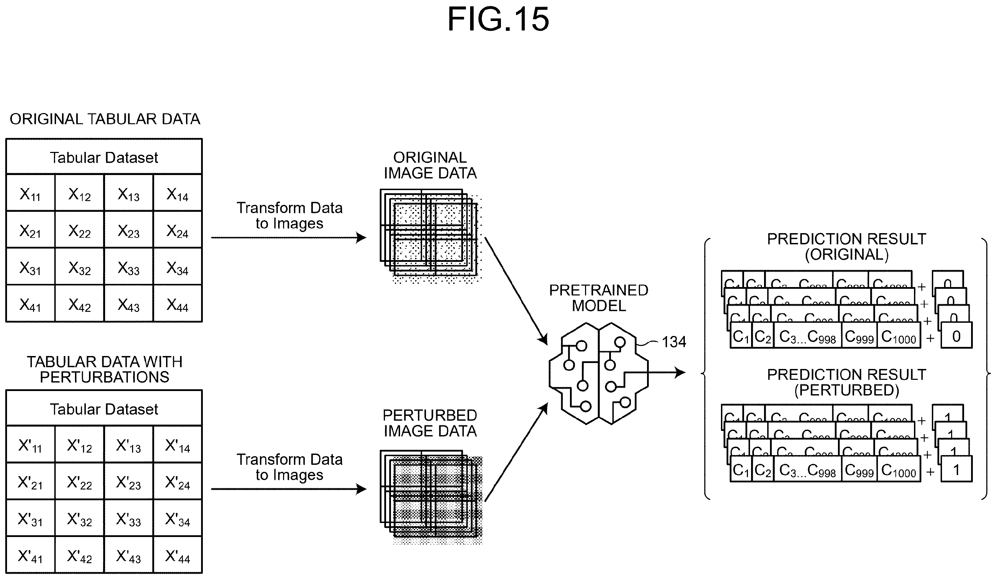

FIG. 15 is a diagram describing generation of training data. As illustrated in FIG. 15, the training data generation unit 154 inputs original image data generated from 4 rows and 4 columns of benign tabular data into the pretrained model 134 to obtain the classification result (features) of the pretrained model 134. Then, the training data generation unit 154 generates training data in which the positive label (1) indicating as being benign is added to the classification result (features).

In the meantime, the training data generation unit 154 inputs perturbed image data that is generated from perturbed data obtained by applying perturbations on the 4 rows and 4 columns of benign tabular data into the pretrained model 134 to obtain the classification result (features) of the pretrained model 134. Then, the training data generation unit 154 generates training data in which the negative label (0) indicating as having adversarial attacks is added to the classification result (features).

Note that the pretrained model 134 trained on a large dataset such as ImageNet is trained to recognize a wide range of visual concepts. With this generalization capability, great performance can be achieved even with different tasks and domains. By leveraging a large pretrained classification model, the performance of the pretrained model 134 can be leveraged to recognize common patterns and translate that knowledge into specific tasks, even when the target domain is different from the original dataset.

The training unit 155 generates the binary detector 135 by using each piece of training data stored in the training data DB 133. In other words, the training unit 155 executes training of the binary detector 135 by using the classification result (prediction result) of the pretrained model 134.

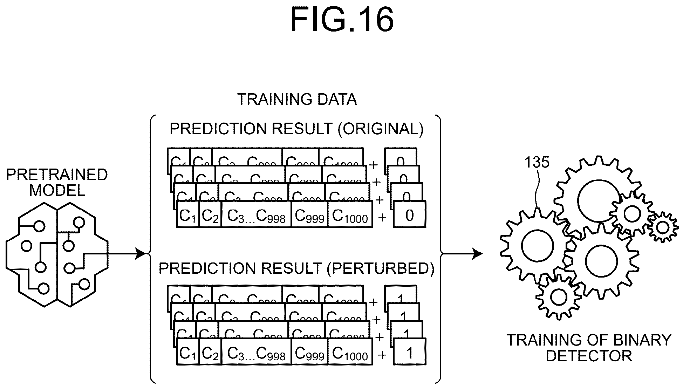

FIG. 16 is a diagram describing training of the binary detector 135. As illustrated in FIG. 16, the training unit 155 executes training of the binary detector 135 by supervised learning using the training data "features, positive label" generated from the benign image data and the training data "features, negative label" generated from the perturbed image data.

Returning to FIG. 12, the detection processing unit 160 is a processing unit that includes an adjustment unit 161 and a detection unit 162, and detects the presence of an adversarial attack on the input data (test data) in tabular form that is the detection target. Specifically, the detection processing unit 160 generates image data on a benign scale and image data with perturbations from the input data, and uses the features of each piece of image data to detect whether it is benign or under an adversarial attack.

The adjustment unit 161 is a processing unit that executes scaling on the input data. Specifically, the adjustment unit 161 uses the scale information A that is a benign scaler to generate tabular data that is scaled in the same manner as the benign data. The adjustment unit 161 then converts the scaled tabular data into image data in the same size as the size at the time of machine learning.

Similarly, the adjustment unit 161 uses the scale information B that is an adversarial scaler to generate tabular data that is scaled in the same manner as the perturbed data. The adjustment unit 161 then converts the scaled tabular data into image data in the same size as the size at the time of machine learning. The adjustment unit 161 then outputs the two pieces of generated image data to the detection unit 162.

The detection unit 162 is a processing unit that detects the presence of an adversarial attack on the input data by using each piece of image data input from the adjustment unit 161. Specifically, the detection unit 162 uses the features of each piece of image data to detect whether it is benign or under an adversarial attack.

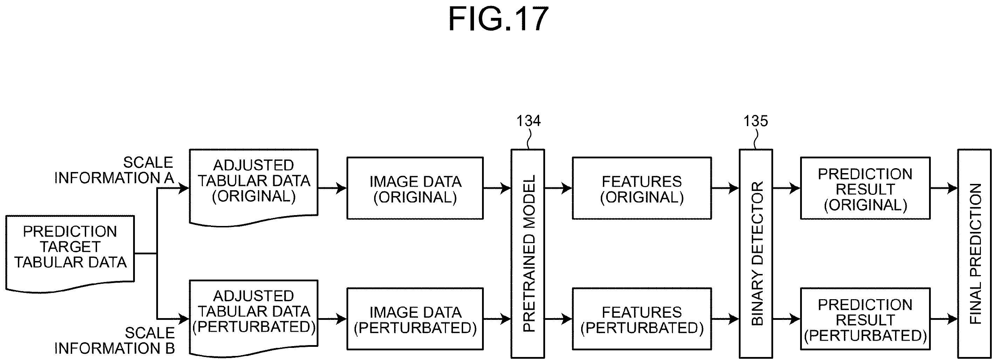

FIG. 17 is a diagram describing detection processing. As illustrated in FIG. 17, the detection unit 162 inputs the image data (original) generated from the input data by the adjustment unit 161 to the pretrained model 134 to obtain features, and inputs the features to the binary detector 135 to obtain the detection result (original). Note that "original" mentioned herein does not indicate that it is known to be benign, but only indicates that the same adjustment as the above benign tabular data is performed.

Similarly, the detection unit 162 inputs the image data (perturbed) generated from the input data by the adjustment unit 161 to the pretrained model 134 to obtain features, and inputs the features to the binary detector 135 to obtain the detection result (perturbed). Note that "perturbation" mentioned herein does not indicate that it is known to be under an adversarial attack, but only indicates that the same adjustment as the above tabular data with perturbations is performed.

Then, the detection unit 162 detects the presence of an adversarial attack on the input data based on the detection result (original) and the detection result (perturbed). For example, the detection unit 162 can detect that the input data is benign (no adversarial attack) when both of the detection results are "benign". The detection unit 162 can also detect that the input data is benign when one of the detection results is "benign" and the prediction probability of being benign is equal to or greater than a threshold.

Furthermore, the detection unit 162 can detect that the input data is benign when both of the detection results are "benign" and the difference in the prediction probability of being benign is less than the threshold. The detection unit 162 can also detect that the input data is benign when both of the detection results are "benign" and the difference in the prediction probability of being not benign is less than the threshold.

### Flow of Processing

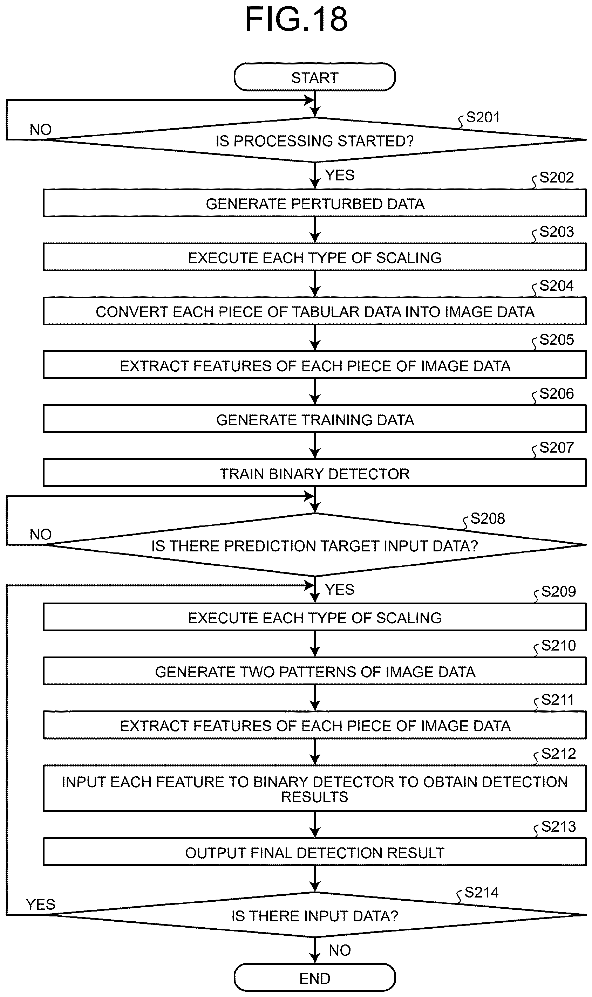

FIG. 18 is a flowchart indicating a flow of processing according to the second embodiment. Although not limited thereto, training and detection (prediction) are described herein as a series of flows. However, training and detection can also be executed in separate flows.

As illustrated in FIG. 18, if the processing is started by an instruction of an administrator or the like (Yes at S201), the detection device 10 converts benign tabular data into perturbed data (S202). Subsequently, the detection device 10 executes scaling on each of the tabular data and perturbed data (S203), and converts each of the scaled tabular data and perturbed data into image data (S204).

Then, by using the pretrained model 134 or the like, the detection device 10 extracts features from each piece of image data (S205), and generates training data using the features of each piece of image data (S206). Subsequently, the detection device 10 executes training of the binary detector 135 using the training data (S207).

Then, if the input data as the prediction target is input (Yes at S208), the detection device 10 executes two types of scaling on the input data (S209) and generates two patterns of scaled image data (S210).

Then, by using the pretrained model 134 or the like, the detection device 10 extracts features from each piece of image data (S211), and inputs each of the features to the binary detector 135 to obtain each detection result (S212).

Subsequently, the detection device 10 determines and outputs the final detection result based on each of the detection results (S213). Thereafter, the detection device 10 executes S209 and thereafter if there is input data (Yes at S214), and ends the processing if there is no input data (No at S214).

### Effects

As described above, the detection device 10 generates the first image based on the tabular data and the second image using the tabular data with perturbations, and generates the binary detector 135 by executing training using the features of the first image and the features of the second image. As a result, the detection device 10 can detect the presence of an adversarial attack on the tabular data, which is difficult to be detected with general machine learning models.

Also, the detection device 10 detects the presence of an adversarial attack on the input data not by using the tabular data and the perturbed data themselves but by using the features of image data converted from the tabular data and the features converted from perturbed data. As a result, the detection device 10 can accurately detect slight changes in the features for the tabular data, which makes it possible to improve the detection accuracy of adversarial attacks on the tabular data.

The detection device 10 also generates image data to be used as training data, using each of the first scale information for the benign tabular data and the second scale information for the tabular data in which perturbations are applied. As a result, the detection device 10 can unify the scale of the benign training data and the scale of adversarial training data with different criteria, thereby making it possible to improve the accuracy of training.

Furthermore, the detection device 10 executes predictions by converting the input data as the prediction target into two scales by using each of the first scale information and the second scale information. As a result, the detection device 10 can make predictions on the same scale same as the scale at the time of training, thereby making it possible to improve the prediction accuracy.

### Third Embodiment

### (c) Third Embodiment

While the embodiments of the present invention are described heretofore, the present invention may be implemented in a variety of different forms in addition to the embodiments described above.

### Numerical Values and Others

The numerical values, elements of tabular data, elements of image data, and features used in the above embodiments, and each of the detectors and the like discussed in the first embodiment are only examples, and can be changed arbitrarily. Furthermore, the flow of the processing described with each flowchart can also be modified as appropriate within the range that there is no contradiction.

### System

The processing procedures, control procedures, specific names, and information including various type of data and parameters presented in the specification and drawings may be changed arbitrarily, unless otherwise noted.

Furthermore, specific forms of distribution and integration of the structural components of each of the devices are not limited to those illustrated in the drawings. For example, the machine learning unit 30 and the detection processing unit 40 may be executed on separate devices. In other words, all or part of the structural components may be functionally or physically distributed and integrated in arbitrary units, depending on various loads, use conditions, and the like. Furthermore, all or any part of each of the processing functions of each of the devices can be implemented by a CPU and a computer program that is analyzed and executed by the CPU, or as hardware using wired logic.

Furthermore, all or any part of each of the processing functions executed by each of the devices can be implemented by a CPU and a computer program that is analyzed and executed by the CPU, or as hardware using wired logic.

### Hardware

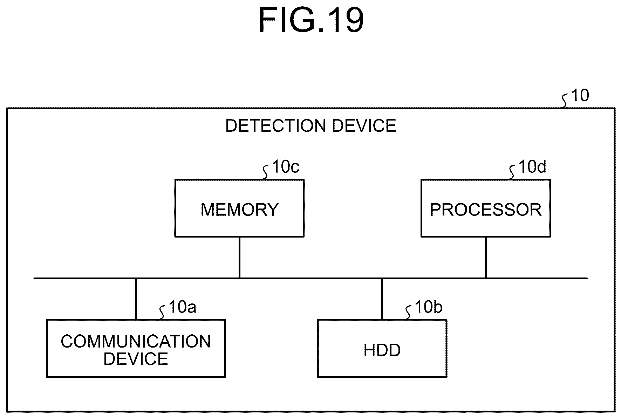

FIG. 19 is a diagram describing a hardware configuration example. As illustrated in FIG. 19, the detection device 10 includes a communication device 10a, a hard disk drive (HDD) 10b, a memory 10c, and a processor 10d. Furthermore, the units illustrated in FIG. 19 are connected to each other by a bus and the like.

The communication device 10a is a network interface card or the like, which communicates with other devices. The HDD 10b stores computer programs and DBs for operating the functions illustrated in FIG. 2 and FIG. 12.

The processor 10d reads out the computer program that executes the same processing as each of the processing units illustrated in FIG. 2 and FIG. 12 from the HDD 10b or the like and expands it on the memory 10c to operate the process for executing each of the functions described with FIG. 2, FIG. 12, and the like. For example, the process executes the same functions as each of the processing units of the detection device 10. Specifically, referring to FIG. 2 as an example, the processor 10d reads out the computer program that has the same functions as the machine learning unit 30, the detection processing unit 40, and the like from the HDD 10b or the like. Then, the processor 10d executes the process for executing the same processing as the machine learning unit 30, the detection processing unit 40, and the like.

As described, the detection device 10 operates as an information processing device that executes the detection method by reading out and executing the computer program. The detection device 10 can also read out the above computer program from a recording medium by a medium reading device, and execute the read computer program to implement the same functions as those of the embodiments described above. Note that the computer program in this other embodiment is not limited to be executed by the detection device 10. For example, the above embodiment may also be applied to the cases where other computers or servers execute the computer program or where those computers or servers collaborate to execute the computer program.

The computer program may also be distributed via a network such as the Internet. Furthermore, the computer program may be recorded on a computer-readable recording medium such as a hard disk, a flexible disk (FD), a CD-ROM, a magneto-optical disk (MO), a digital versatile disc (DVD), or the like, and executed by a computer by being read out from the recording medium.

### Reference Signs List

In any of the above aspects, the various features may be implemented in hardware, or as software modules running on one or more processors/computers.

Embodiments are provided as a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

With one aspect, it is possible to effectively detect anomalies for tabular data.

## Claims

1. A detection program that causes a computer to execute a process comprising:
converting (S102) input tabular data into image data;
generating (S103, S104) a first machine learning model by machine learning using the tabular data as training data, and generating a second machine learning model by machine learning using the image data as training data; and
detecting (S112, S113, S114) presence of an adversarial attack on input data based on a first prediction result for the input data obtained using the first machine learning model and a second prediction result for the input data obtained using the second machine learning model.

2. The detection program according to claim 1, wherein the second machine learning model is a different architecture from the first machine learning model.

3. The detection program according to claim 1 or 2, wherein
the generating (S103, S104) includes
generating the first machine learning model by unsupervised learning using the tabular data as training data; and
generating the second machine learning model by unsupervised learning using the image data as training data.

4. The detection program according to any preceding claim, wherein
the detecting (S112, S113, S114) includes
obtaining (S111), by using a detector that outputs an explanation value for explaining prediction results of machine learning models, a first explanation value for the first machine learning model and a second explanation value for the second machine learning model; and
detecting (S112, S113, S114) presence of an adversarial attack on the input data based on similarity between the first explanation value and the second explanation value.

5. The detection program according to any of claims 1 to 3, wherein
the detecting (S112, S113, S114) includes
computing (S111) a difference between the first prediction result obtained by using the first machine learning model and the second prediction result obtained by using the second machine learning model; and
detecting (S112, S113, S114) that there is an adversarial attack on the input data when the difference is equal to or greater than a threshold, and detecting that there is no adversarial attack on the input data when the difference is less than the threshold.

6. The detection program according to any of claims 1 to 4, wherein
the detecting (S112, S113, S114) includes
obtaining (S111), by using a plurality of detectors that output explanation values for explaining prediction results of machine learning models, the explanation values for the first machine learning model and the explanation values for the second machine learning model; and
detecting (S112, S113, S114) presence of an adversarial attack on the input data based on each of the explanation values obtained from the respective detectors.

7. The detection program according to claim 6, wherein
the detecting (S112, S113, S114) includes
generating (S111) first vector information that has each of the first explanation values as an element output from each of the detectors for the first machine learning model, and generating second vector information that has each of the second explanation values as an element output from each of the detectors for the second machine learning model; and
detecting (S112, S113, S114) presence of an adversarial attack on the input data based on similarity between the first vector information and the second vector information.

8. The detection program according to claim 6, wherein the detecting (S112, S113, S114) includes
identifying (S111) detection results of the respective detectors according to the explanation values output from the respective detectors; and
determining (S112, S113, S114), as a detection result regarding presence of an adversarial attack on the input data, the most common detection result among the detection results of the detectors.

9. The detection program according to claim 6, wherein the detecting (S112, S113, S114) includes
identifying (S111) detection results of the respective detectors according to the explanation values output from the respective detectors; and
detecting (S112, S113, S114) an adversarial attack on the input data, when an adversarial attack is detected at least as one detection result among the respective detection results of the detectors.

10. A detection method carried out by a computer (10), comprising:
converting (S102) input tabular data into image data;
generating (S103, S104) a first machine learning model by machine learning using the tabular data as training data, and generating a second machine learning model by machine learning using the image data as training data; and
detecting (S112, S113, S114) presence of an adversarial attack on input data based on a first prediction result for the input data obtained using the first machine learning model and a second prediction result for the input data obtained using the second machine learning model.

11. A detection device comprising:
a control unit (20) configured to execute a process comprising:
converting input tabular data into image data;
generating a first machine learning model by machine learning using the tabular data as training data, and generates a second machine learning model by machine learning using the image data as training data; and
detecting presence of an adversarial attack on input data based on a first prediction result for the input data obtained using the first machine learning model and a second prediction result for the input data obtained using the second machine learning model.
